# FASCICULE DE BREVET EUROPEEN

(11) **EP 1 098 561 B1**
(45) Date de publication et mention de la délivrance du brevet: **27.11.2002**
(21) Numéro de dépôt: 00925400.4
(22) Date de dépôt: 05.05.2000
(51) Int. Cl.: A01G 9/12, A01G 17/08

(54) **AGRAFE DE PALISSAGE AUTOCASSANTE**
SELBSTZERBRECHLICHE SPALIERKLAMMER
SELF-RUPTURING TYING CLIP

(30) Priorité: 11.05.1999 FR 9906054
(43) Date de publication de la demande: 16.05.2001
(73) Titulaire: Delozanne, Bernadette, 51500 Chamery (FR)
(72) Inventeur: Delozanne, Bernadette, 51500 Chamery (FR)
(74) Mandataire: Gérardin, Robert Jean René
(86) Numéro de dépôt international: FR0001220
(87) Numéro de publication internationale: WO00067556

(56) Documents cités:
- FR-A- 548 640
- FR-A- 2 632 364
- FR-A- 2 647 633
- FR-A- 2 685 163
- NL-A- 9 400 113
- US-A- 5 784 762

## Description

L'invention concerne les agrafes autocassantes en matière plastique pour le palissage de végétation haute cultivée en ligne, telle que la vigne.

Il est connu d'utiliser, en viticulture, pour le palissage des sarments de vigne, au fur et à mesure de leur croissance, des fils de fer jumelés, que l'on remonte le long des piquets supportant les fils de charpente, de façon que les rameaux restent emprisonnés entre les fils de palissage, qui sont, dans ce but, reliés entre eux de proche en proche, entre les piquets, à l'aide d'agrafes formant un double crochet, telle que celle décrite et représentée dans le brevet d'invention français 548 640 et qui est constituée d'une plaquette métallique percée de deux trous pour le passage des fils, chaque trou comportant une entrée en chicane obtenue par torsion d'une partie de la plaquette découpée dans ce sens.

Cependant, après la récolte, les fils de palissage doivent être désolidarisés, afin que, après décrochage des piquets, ils puissent reposer librement sur le sol, afin de ne pas constituer de gêne lors du prétaillage, qui est généralement effectué à l'aide de machines mettant en oeuvre des lames de coupe rotatives.

Il est donc indispensable de libérer les fils de palissage de leurs agrafes de liaison avant de procéder à leur décrochage des piquets, puis à leur dépôt sur le sol.

Si des moyens d'agrafage mécaniques existent, il n'a pas encore été proposé de moyens mécaniques satisfaisants pour retirer les agrafes ; aussi, a-t'on imaginé différentes solutions permettant leur destruction ou leur autodestruction à un moment approprié.

Pour obtenir ce résultat, il a été développé des agrafes biodégradables ou photodégradables, qui se distinguent de celles ci-dessus évoquées par leur réalisation dans une matière appropriée, figurant dans l'état de la technique et déjà connue pour sa sensibilité à l'action bactérienne ou à la lumière. On comprend que, dans ces conditions, la période de rupture ne puisse être déterminée avec précision, compte-tenu de la dépendance de l'activité bactérienne et de la photodégradation par rapport aux conditions atmosphériques et météorologiques. C'est ainsi, notamment, que des agrafes se rompent avant l'heure, ou sont encore intactes au moment où l'on intervient pour décrocher les fils de palissage des piquets et les laisser retomber sur le sol.

Pour remédier à ce problème et rester maître de la rupture des agrafes au moment approprié, il a été proposé, dans le brevet français 2 647 633, une attache détériorable notamment pour le palissage de la vigne, qui se distingue de celles évoquées ci-dessus par le fait qu'elle comporte une ou plusieurs zones d'affaiblissement dans la matière de l'attache, créant une amorce de rupture entre l'extrémité libre d'une fente et au moins un bord de l'attache. Ces zones d'affaiblissement sont constituées d'entailles réalisées à l'extrémité libre d'au moins l'une des fentes de l'agrafe, en regard d'une autre entaille pratiquée sur au moins un bord de l'attache, ou sont obtenues par création d'un défaut de moulage dans le matériau de l'attache, afin de créer une fragilité à l'arrachement. On comprend que la rupture des agrafes de cette définition puisse être obtenue au moment approprié par simple sollicitation latérale un peu forte des fils de palissage, mais on comprend aussi que les effets d'entailles et les défauts de moulage, qui ne peuvent d'ailleurs, pour des raisons de coût, être obtenus avec grande précision quant à l'affaiblissement obtenu, sont bien connus en mécanique pour être générateurs de ruptures de fatigue, qui, dans ce cas, peuvent provenir de vibrations appliquées par le vent sur les fils.

La présente invention a pour but de remédier à ces inconvénients. L'invention, telle qu'elle se caractérise, résout le problème consistant à créer une agrafe de palissage autocassante, dans laquelle les fils puissent être retenus après leur introduction, qui soit fragilisée de manière régulière sans recourir à des amorces de ruptures localisées, ni à des composants réduisant, au cours du temps, la résistance mécanique du matériau utilisé, qui puisse, en conséquence, être choisi parmi les matières plastiques courantes, moulables par injection à chaud.

L'agrafe autocassante en matière plastique pour le palissage de végétation haute cultivée en ligne, telle que la vigne, comportant deux fentes fermées à l'une de leurs extrémités et ayant une ouverture commune, selon l'invention, se caractérise, principalement, en ce que les deux fentes sont semi-circulaires et délimitées vers l'intérieur de l'agrafe, ainsi que leur ouverture commune, par deux languettes dirigées vers l'intérieur de l'agrafe. Ces deux languettes sont, de préférence, coudées vers l'intérieur des fentes, selon un angle obtus.

Selon un mode de réalisation préférentiel, l'agrafe est réalisée en polyéthylène et est rendue autocassante par des évidements ménagés entre les fentes et le bord du corps de l'agrafe.

Selon un mode de réalisation simplifié, l'agrafe, réalisée en polyéthylène, est rendue autocassante par réduction de son épaisseur.

Selon un autre mode de réalisation simplifié, l'agrafe, réalisée en matière plastique, est rendue autocassante par adjonction d'une charge réduisant les caractéristiques mécaniques de la matière plastique utilisée.

Un talon de préhension est prévu du côté opposé à l'ouverture des fentes.

L'épaisseur du corps de l'agrafe est décroissante du talon de préhension vers l'ouverture des fentes.

Les avantages obtenus, grâce à cette invention, consistent, principalement, en ce que cette agrafe ne libère les fils de palissage qu'elle retient que lors de sa rupture résultant d'une traction latérale volontaire sur les fils, mécanique ou manuelle, en ce qu'elle n'exige, pour sa réalisation, qu'une très petite quantité d'une matière plastique très courante et bon marché, et en ce qu'elle offre une grande légèreté et une facilité de mise en oeuvre.

D'autres caractéristiques et avantages apparaîtront dans la description qui va suivre d'une agrafe ajourée pour palissage de la vigne, réalisée selon l'invention, donnée à titre d'exemple non limitatif, au regard des dessins annexés sur lesquels :
- la figure 1 représente une vue de côté de l'agrafe, montée sur des fils de palissage représentés en coupe,
- la figure 2 représente une vue arrière de l'agrafe selon la figure 1,
- la figure 3 représente une vue de dessus de l'agrafe selon la figure 1.

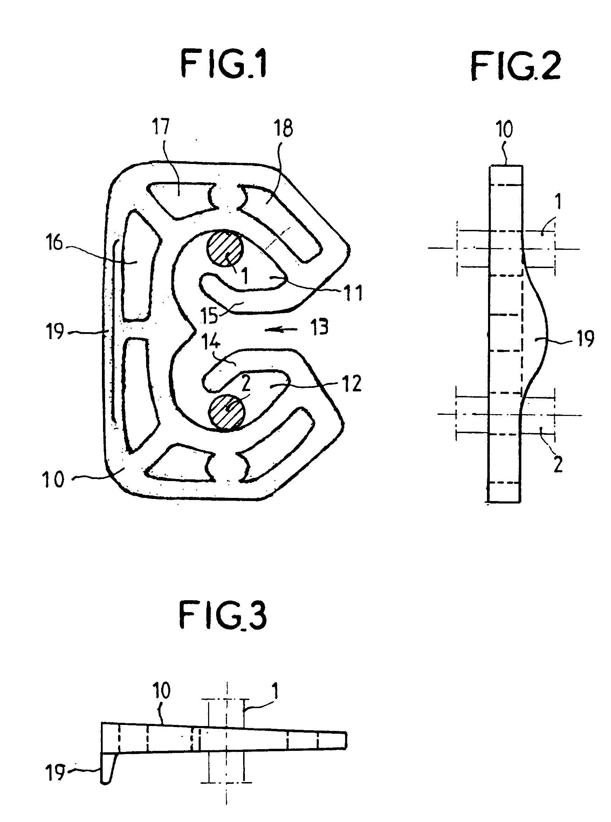

L'agrafe de palissage comporte, selon les figures 1 à 3, deux fentes semi-circulaires **11** et **12** délimitées vers l'intérieur de l'agrafe, ainsi que leur ouverture commune **13**, par deux languettes **14** et **15,** coudées vers l'intérieur des fentes **11** et **12** de l'agrafe, qui est rendue autocassante par l'existence d'évidements **16, 17, 18** ménagés entre les fentes **11** et **12** et le bord du corps **10** de l'agrafe, qui comporte un talon **19** facilitant sa préhension et sa mise en place sur les fils de palissage **1** et **2**.

Comme on le voit sur ce mode de réalisation ajouré, donné à titre d'exemple, les fils de palissage **1** et **2**, après qu'ils aient été introduits successivement dans les fentes semi-circulaires **11** et **12,** sont autobloqués et ne peuvent, comme le montre la figure 1, se libérer, même lors d'un rapprochement des deux fils, puisque, dans ce cas, les languettes **14** et **15**, compte-tenu de leur forme coudée et de leur flexibilité, viennent en contact et obturent ainsi l'ouverture commune **13** des fentes **11, 12.**

On remarque aussi que la présence d'évidements **16, 17, 18** dans la partie du corps **10** de l'agrafe, situés entre le bord des fentes **11, 12** et le bord externe de l'agrafe, fragilise la partie avant du corps **10** de l'agrafe, d'autant que celui-ci est progressivement aminci du talon **19** vers l'extrémité avant.

Il suffit donc d'écarter les fils **1** et **2** en exerçant, sur ceux-ci, une certaine force latérale vers l'extérieur de l'agrafe, pour obtenir la rupture de l'un des côtés au moins de celle-ci, ce qui désolidarise les deux fils **1** et **2** et libère les rameaux de vigne.

L'agrafe selon l'invention est destinée, principalement, à la viticulture, mais rien ne s'oppose à son utilisation dans d'autres domaines agricoles où l'on a à rapprocher et à relier latéralement et temporairement deux fils, qui devront être ensuite désolidarisés aisément et globalement, sous réserve d'adaptations mineures évidentes pour un homme de métier, pouvant consister, par exemple, à accroître la largeur des agrafes sans réduire nécessairement celle de l'ouverture de celles-ci, mais en décalant vers les extrémités des dites agrafes les fentes semi-circulaires de passage et de retenue des fils pour obtenir un écartement plus important de ces derniers, après mise en place des agrafes.

## Revendications

1. Agrafe autocassante en matière plastique pour le palissage de végétation haute cultivée en ligne, telle que la vigne, comportant deux fentes fermées à l'une de leurs extrémités et ayant une ouverture commune, **caractérisée en ce que** les deux fentes (**11, 12**) sont semi-circulaires et délimitées vers l'intérieur de l'agrafe, ainsi que leur ouverture commune (**13**), par deux languettes (**14, 15**) dirigées vers l'intérieur de l'agrafe.

2. Agrafe selon la revendication 1, **caractérisée en ce que** les deux languettes (**14, 15**), délimitant les fentes et leur ouverture commune (**13**), sont coudées vers l'intérieur des dites fentes (**11, 12**) selon un angle obtus.

3. Agrafe selon la revendication 1, **caractérisée en ce que** la matière plastique utilisée est du polyéthylène.

4. Agrafe selon la revendication 1, **caractérisée en ce qu'**elle est rendue autocassante par des évidements (**16, 17, 18**), ménagés entre les fentes (**11, 12**) et le bord du corps (**10**) de l'agrafe.

5. Agrafe selon la revendication 1, **caractérisée en ce qu'**elle est rendue autocassante par réduction de son épaisseur.

6. Agrafe selon la revendication 1, **caractérisée en ce qu'**elle est rendue autocassante par adjonction, à la matière plastique, d'une charge réduisant ses caractéristiques mécaniques.

7. Agrafe selon la revendication 1, **caractérisée en ce qu'**elle comporte un talon (**19**) de préhension situé du côté opposé à l'ouverture commune (**13**) des deux fentes (**11, 12**).

8. Agrafe selon la revendication 1, **caractérisée en ce que** l'épaisseur de son corps (**10**) est décroissante du talon (**19**) vers l'ouverture (**13**) des fentes (**11, 12**).

## Patentansprüche

1. Selbstzerbrechliche Klammer aus Plastik für das Anheften im Spalier von hochkultivierten Pflanzen, wie Rebstöcke, die zwei Spalten aufweisen, die an einem Ende verschlossen sind und eine gemeinsame Öffnung haben,
**dadurch gekennzeichnet,**
**dass** die beiden Spalten (11, 12) halbkreisförmig sind und gegen das Innere der Klammer sowie ihre gemeinsame Öffnung (13) durch zwei Zungen (14, 15) abgegrenzt sind, die gegen das Innere der Klammer gerichtet sind.

2. Klammer nach Anspruch 1, **dadurch gekennzeichnet, dass** die beiden Zungen (14, 15), die die Spalten und ihre gemeinsame Öffnung (13) abgrenzen, gegen das Innere der Spalten (11, 12) in einem stumpfen Winkel gekrümmt sind.

3. Klammer nach Anspruch 1, **dadurch gekennzeichnet, dass** das benutzte Plastikmaterial Polyethylen ist.

4. Klammer nach Anspruch 1, **dadurch gekennzeichnet, dass** sie durch Aussparungen (16, 17, 18) selbstzerbrechlich ist, die zwischen den Spalten (11, 12) und dem Rand des Körpers (10) der Klammer angeordnet sind.

5. Klammer nach Anspruch 1, **dadurch gekennzeichnet, dass** sie durch die Verminderung ihrer Dicke selbstzerbrechlich ist.

6. Klammer nach Anspruch 1, **dadurch gekennzeichnet, dass** sie durch die Zugabe eines Bestandteils zur Plastikmasse, der ihre mechanischen Eigenschaften vermindert, selbstzerbrechlich ist.

7. Klammer nach Anspruch 1, **dadurch gekennzeichnet, dass** sie eine Greifkante (19) aufweist, die an der Seite angeordnet ist, die der gemeinsamen Öffnung (13) der beiden Spalten (11, 12) gegenüberliegt.

8. Klammer nach Anspruch 1, **dadurch gekennzeichnet, dass** die Dicke ihres Körpers (10) von der Kante (19) hin zur Öffnung (13) der Spalten (11, 12) abnimmt.

## Claims

1. A self-rupturing clip of plastic material for espaliering tall vegetation cultivated in rows, such as vines, comprising two slits closed at one end and having a common opening,
**characterised in that**
the two slits (11, 12) are semi-circular and delimited towards the inside of the clip, as is their common opening (13), by two tongues (14, 15) directed towards the inside of the clip.

2. A clip in accordance with Claim 1,
**characterised in that**
the two tongues (14, 15) delimiting the slits and their common opening (13) are angled towards the inside of the said slits (11, 12) at an obtuse angle.

3. A clip in accordance with Claim 1,
**characterised in that**
the plastic material used is polyethylene.

4. A clip in accordance with Claim 1,
**characterised in that**
it is rendered self-rupturing by hollow areas (16, 17, 18) made between the slits (11, 12) and the edge of the body (10) of the clip.

5. A clip in accordance with Claim 1,
**characterised in that**
it is rendered self-rupturing by reducing its thickness.

6. A clip in accordance with Claim 1,
**characterised in that**
it is made self-rupturing by applying to the plastic material a load reducing its mechanical properties.

7. A clip in accordance with Claim 1,
**characterised in that**
it comprises a projecting shoulder (19) situated on the side opposite the common opening (13) of the two slits (11, 12).

8. A clip in accordance with Claim 1,
**characterised in that**
the thickness of its body (10) decreases from the shoulder (19) to the opening (13) of the slits (11, 12).
